# EUROPÄISCHE PATENTSCHRIFT

(11) **EP 0 367 987 B1**
(45) Veröffentlichungstag und Bekanntmachung des Hinweises auf die Patenterteilung: **27.10.1993**
(21) Anmeldenummer: 89118376.6
(22) Anmeldetag: 04.10.1989
(51) Int. Cl.: H02P 3/06

(54) **Bremsschaltung für Reihenschlussmotor**
Brake circuit for a series motor
Circuit de freinage pour un moteur-série

(30) Priorität: 09.11.1988 DE 3837943
(43) Veröffentlichungstag der Anmeldung: 16.05.1990
(73) Patentinhaber: ROBERT BOSCH GMBH, 70442 Stuttgart (DE)
(72) Erfinder: Hornung, Friedrich, Dipl.-Ing., D-7000 Stuttgart 80 (DE); Fiebig, Arnim, El-Ing., D-7022 Leinfelden-Echterdingen (DE); Kirn, Manfred, El.-Ing., D-7000 Stuttgart 80 (DE); Schaal, Günter, El.-Ing., D-7000 Stuttgart 80 (DE)

(56) Entgegenhaltungen:
- EP-A- 0 326 146
- CH-A- 501 334
- DE-A- 2 624 236
- DE-A- 2 652 521
- DE-A- 2 842 145
- DE-A- 3 035 185

## Beschreibung

### Stand der Technik

Die Erfindung geht aus von einer Schaltungsanordnung zum Abbremsen eines Reihenschlußmotors nach der Gattung des Hauptanspruchs.

Reihenschlußmotoren, die häufig auch als Universalmotoren bezeichnet werden, werden eingesetzt zum Antrieb von beispielsweise Elektrohandwerkzeugen wie Heckenscheren, Kettensägen, Rasenmäher, Schleifmaschinen oder Elektrohobel. Nach Abschalten der Netzspannung weisen diese Maschinen aufgrund der kinetischen Energie ihres Antriebes eine längere Nachlaufzeit auf. Die nachlaufenden Schneidemesser, Scheren, Sägen, Schleifscheiben oder Ketten stellen für den Bediener dieser Geräte eine nicht unerhebliche Verletzungsgefahr dar. Es ist daher zweckmäßig, beim Abschalten der Netzspannung für ein schnelles Abbremsen des Motors und damit des Werkzeuges zu sorgen. Mechanische Bremsvorrichtungen zum Abbremsen der Werkzeuge sind wenig geeignet, da sie von der Konstruktion aufwendig, teuer und verschleißanfällig sind. Üblicherweise werden daher zum Abbremsen des Elektromotors Schaltungen verwendet, bei denen der Motor nach dem Abschalten der Versorgungsspannung in den Generatorbetrieb umgeschaltet wird. Die im Generatorbetrieb erzeugte Energie wird dann als Bremsstrom über Lastwiderstände in Form von Wärme an die Umgebung abgegeben. Aus der DE-OS 30 35 185 ist bekannt, daß zur Einstellung des Bremsstromes ein NTC-Widerstand in den Ankerkreis geschaltet ist, über den nach Abschalten des Netzes so lange ein Bremsstrom fließt, bis der Motor mit den angekoppelten Werkzeugen etwa steht.

Ein Problem dabei ist, daß die zum Generatorbetrieb erforderliche Selbsterregung aus der Remanenz des Feldpaketes aufgebaut werden muß. Die Remanenz reicht aber, insbesondere bei Motoren mit größeren Leistungen, nicht immer aus, um die Selbsterregung anzustoßen, d.h. um in den sicheren Generatorbetrieb zu kommen.

Aus der DE 26 24 236 A1 ist eine Schaltungsanordnung zum Bremsen eines Universalmotors bekannt, bei dem während des Motorbetriebes ein Kondensator aufgeladen wird. Zum Bremsen wird nach dem Umschalten eines Feldwicklungsteils die Ladung des Kondensator verwendet um die Selbsterregung des Motors aufzubauen. Nach der Entladung des Kondensators ist dieser wirkungslos. Dadurch kann insbesondere bei Unterbrechung des Bremskreises oder bei korrodierten Kollektoren des Ankers der Bremskreis kurzfristig unterbrochen werden, sodaß der Motor ohne Bremswirkung austrudelt.

Eine Bremsschaltung für Universalmotoren ist ferner der unter Artikel 54(3) EPÜ fallenden EP 0 326 146 A1 entnehmbar. Zum Abbremsen eines Reihenschlußmotors wird vorgeschlagen, anstelle von Bremswiderständen einen Teil der Feldwicklungen zu verwenden. Der durch einen Teil der Feldwicklung fließende Strom wird geregelt und wirkt dem Bremsstrom im Sinne einer Feldschwächung entgegen. Durch einen Ladekondensator, der während des Motorbetriebes aufgeladen wird, wird nach dem Umschalten auf den Bremsbetrieb sichergestellt, daß die Anfangserregung des Magnetfeldes gewährleistet ist. Ein Nachladen des Kondensators während des Bremsbetriebes findet nicht statt.

### Vorteile der Erfindung

Die erfindungsgemäße Schaltungsanordnung mit den kennzeichnenden Merkmalen der Hauptansprüche hat demgegenüber den Vorteil, daß nach Umschalten in den Generatorbetrieb die Selbsterregung des Feldes durch einen netzseitig eingespeisten Dauerstrom sicher angestoßen wird. Besonders vorteilhaft ist, daß der Dauerstrom in der ganzen oder nur in einem Teil der Feldwicklung eingespeist wird, da dadurch ein sehr einfacher und kostengünstiger Aufbau der Schaltungsanordnung erfolgen kann.

Durch die in den Unteransprüchen aufgeführten Maßnahmen sind vorteilhafte Weiterbildungen und Verbesserungen der im Hauptanspruch angegebenen Schaltungsanordnung möglich. Es ist vorteilhaft, daß bei einem Wechselspannungsnetz der Dauerstrom durch einen Kondensator begrenzt wird. Dadurch wird die zusätzliche Wirkverlustleistung klein gehalten. Auch ist es vorteilhaft, als Stromoegrenzung einen Widerstand vorzusehen, der sehr kostengünstig herstellbar ist. Weiterhin ist vorteilhaft, daß der durch die Feldspulen fließende Dauerstrom klein ist gegenüber dem Leerlaufstrom. Dadurch kann eine einfache und kostensparende Strombegrenzung eingesetzt werden.

Wird diese Schaltungsanordnung zur Abbremsung von Wendepolmotoren verwendet, dann kann besonders vorteilhaft mit einem großen Grenzstrom gefahren werden, da bei ihnen wegen der neutralen Ankerverschaltung die Kommutierung im Generatorbetrieb besonders günstig ist.

Weitere Vorteile ergeben sich aus der Beschreibung der Ausführungsbeispiele.

### Zeichnung

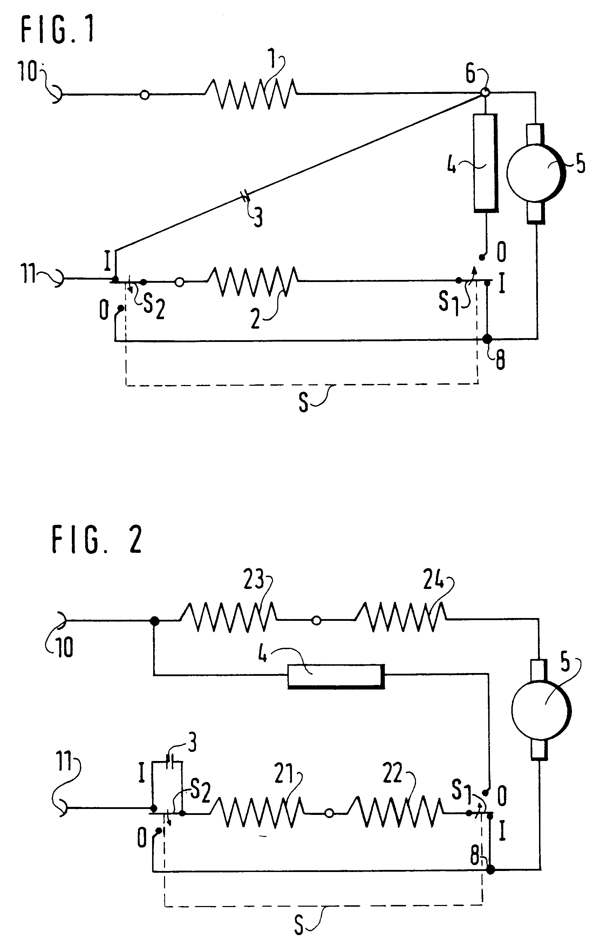

Ausführungsbeispiele der Erfindung sind in der Zeichnung dargestellt und in der nachfolgenden Beschreibung näher erläutert. Figur 1 zeigt ein erstes Ausführungsbeispiel und Figur 2 ein zweites Ausführungsbeispiel der erfindungsgemäßen Schaltungsanordnung.

### Beschreibung der Ausführungsbeispiele

In Figur 1 ist ein erstes Ausführungsbeispiel der erfindungsgemäßen Anordnung dargestellt. Es zeigt einen Reihenschlußmotor mit seinen Feldwicklungen 1 und 2, zwischen denen der Anker 5 in Reihe geschaltet ist. Die Feldwicklungen 1 und 2 sind mit ihren freien Enden mit dem Spannungsversorgungsnetz verbunden. Parallel zu dem Anker 5 ist ein Widerstand 4 geschaltet, der über einen zweipoligen Umschalter S mit einem Anschluß der umschaltbaren Feldwicklung 2 verbunden werden kann. Der zweite Kontaktsatz S2 des Umschalters S schaltet das zweite Ende dieser Feldwicklung 2 je nach Stellung des Schalters 1 entweder an den Anschluß 11 des Spannungsversorgungsnetzes oder an den Anschluß 8 des Ankers 5. An den Anschluß 11 ist außerdem ein Kondensator 3 geschaltet, dessen zweiter Anschluß zu dem Knoten 6 geführt wird, der aus dem Anschluß der Feldspule 1 mit einem Anschluß des Ankers 5 und dem Widerstand 4 gebildet wird. Die Kontaktsätze S1 und S2 des Schalters S werden gleichzeitig umgeschaltet. In der Stellung I (Motorbetrieb) ist die Feldwicklung 2 mit der Klemme 11 des Spannungsversorgungsnetzes verbunden und mit dem Anschluß 8 des Ankers 5 verbunden. In der Stellung 0 (Generatorbetrieb) wird die Feldwicklung 2 über den Schaltkontakt S1 in Reihe zum Widerstand 4 geschaltet und das zweite Ende der Feldwicklung 2 über den Kontaktsatz S2 dem Anker parallelgeschaltet. Durch Umschalten des Schalters S erfolgt also eine Umpolung der Feldwicklung 2. Der Widerstand 4 kann auch durch einen Kurzschluß ersetzt werden.

Wird der Umschalter S in die Position I geschaltet, dann wird der Universalmotor im Motorbetrieb betrieben. Zusätzlich zu dem Ankerstrom fließt über den Kondensator 3 ein Strom, dessen Größe von der Dimensionierung des Kondensators 3 und der Feldwicklung 1 definiert ist. In dieser Stellung hat der Kondensator 3 jedoch eine weitere Funktion. Da er dem Anker und einem Teil der Feldwicklung parallelgeschaltet ist, bewirkt er, daß Störfunken, die durch Kommutierung der Bürsten entstehen, bedämpft werden. Hinzu kommt, daß der über den Kondensator 3 fließende Strom praktisch zu keiner nennenswerten Erwärmung der Feldwicklung 1 führt, da er sehr gering ist. Der Widerstand 4 ist in dieser Betriebsstellung nicht aktiv, so daß er in dieser Stellung des Schalters S keinen Einfluß auf den Motorbetrieb hat.

Im folgenden wird die Wirkungsweise dieser Schaltungsanordnung beschrieben.

Beim Umschalten des Elektromotors vom Motorbetrieb in den Generatorbetrieb, d.h. in den Bremsbetrieb, fließt durch die Feldwicklung 2 über den Widerstand 4 der Bremsstrom des Ankers, der durch die Erregung des Feldes induziert wurde. Dabei sorgt der über den Kondensator 3 in die Feldwicklung 1 eingespeiste Dauerstrom für den Aufbau der notwendigen Selbsterregung. Bei kleinen Motoren genügt oftmals die Remanenz der Wickelpakete zur Selbsterregung aus. Bei größeren Motoren ist jedoch die in ihnen enthaltene Energie zu gering. Um den Anstoß der Erregung im selbsterregten Generatorbetrieb sicherzustellen, wird daher der netzgespeiste Dauerstrom über den Kondensator 3 der Feldwicklung 1 zugeführt. Es genügt, wenn die Größe des Dauerstromes gegenüber dem Leerlaufstrom der Maschine klein ist. Versuche haben gezeigt, daß einige Prozent bis maximal 15 Prozent ausreichend sind. Die Begrenzung des Dauerstroms auf den erforderlichen Wert kann daher durch einen verlustarmen Kondensator erfolgen. Es hat sich gezeigt, daß dieser Dauerstrom nur über eine Feldspule zu fließen braucht. Die Größe des Bremsstromes, der über die Feldwicklung 2 im Ankerkreis fließt, wird im wesentlichen durch die Größe des Widerstandes 4 bestimmt.

Der Umschalter S kann gleichzeitig zur einpoligen Abschaltung des Elektrowerkzeuges herangezogen werden. Wünscht man eine zweipolige Abschaltung des Elektrowerkzeuges, dann muß mit geeigneten Mitteln sichergestellt werden, beispielsweise durch einen nicht dargestellten dreipoligen Schalter, daß die Feldwicklung 1 mit einem Dauerstrom versorgt wird. Die Anwendung dieser Schaltungsanordnung verbessert bei Reihenschlußmotoren die Selbsterregung des Magnetfeldes. Sie ist daher nicht begrenzt auf bestimmte Motorengrößen.

Normale Reihenschlußmotoren haben entsprechend ihrer Drehrichtung eine unsymmetrische Ankerverschaltung, damit eine optimale Kommutierung beim Motorbetrieb erreicht wird. Um eine optimale Kommutierung beim Generatorbetrieb zu erreichen, müßte nun die Ankerverschaltung, von der neutralen Zone aus gesehen, genau spiegelbildlich vertauscht sein. Da die Ankerverschaltung nicht veränderbar ist, tritt beim Generatorbetrieb durch die verschlechterte Kommutierung erhebliches Bürstenfeuer auf, das die Bürsten und den Kollektor stark beansprucht und zu hoher Erwärmung und Verschleiß führt. Größere Motoren werden daher mit Wendepolen ausgerüstet, bei denen durch die Anordnung der Bürsten das Auftreten des Bürstenfeuers minimiert ist. Solche Motoren können mit der beschriebenen Schaltungsanordnung besonders günstig gebremst werden, da bei ihnen ein hoher Bremsstrom zulässig ist und der Dauerstrom keinen negativen Einfluß auf die Lebensdauer des Motors hat.

Die Schaltungsanordnung läßt sich auch verwenden bei Motoren mit Drehrichtungsumkehr, da sie keine drehrichtungsbegrenzenden Bauteile aufweist.

In Figur 2 wird ein zweites Ausführungsbeispiel vorgeschlagen, das den Stromlaufplan eines Wendepolmotors wiedergibt.

In Reihe zu den zwei Feldwicklungen 21, 22 und dem Anker 5 sind zwei Wendepolwicklungen 23, 24 geschaltet. Die Feldwicklungen 21, 22 sind über die Umschalter S1, S2 (Stellung I) mit dem Netzanschluß 11 und dem Anker 5 verbunden. In Stellung 0 werden die Feldwicklungen 21, 22 umgepolt und zum Anker 5 mit den Wendepolwicklungen 23, 24 parallelgeschaltet, wobei der Netzanschluß 11 über den Kondensator 3 mit der Feldwicklung 21 verbunden bleibt. In Reihe zu den Feldwicklungen 21, 22 kann ein Widerstand 4 geschaltet werden, der nur im Bremsbetrieb (Stellung 0) wirksam ist. Die Wendepolwicklung 23 ist mit ihrem einen Ende an den zweiten Netzanschluß 10 angeschlossen.

Die Wirkungsweise dieses zweiten Ausführungsbeispiels entspricht der des ersten Ausführungsbeispiels.

Nach dem Umschalten der Feldwicklungen 21, 22 in den Bremsbetrieb (Stellung 0 der Umschalter S1, S2) fließt über den Kondensator 3 ein Strom in die Feldwicklungen 21, 22, der die Selbsterregung des Generators anstößt und im Ankerkreis einen Bremsstrom generiert. Durch die Größe des Widerstandes 4 wird der Bremsstrom begrenzt und damit die Bremswirkung auf den Anker 5 eingestellt.

## Patentansprüche

1. Schaltungsanordnung zum Abbremsen eines an einem Wechselspannungsnetz anschließbaren Reihenschlußmotors, vorzugsweise eines Universalmotors mit einer zweigeteilten Feldwicklung (1, 2), bei der im Bremsbetrieb der erste Feldwicklungsteil (2) umgepolt und dem Anker in Reihe geschaltet ist, und mit einem Kondensator, der vom Wechselspannungsnetz aufladbar ist und der im Bremsbetrieb des Reihenschlußmotors einem Feldwicklungsteil (1) einen Strom zuführt, und bei dem während des Bremsbetriebes des Motors der zweite Feldwicklungsteil (1) mit dem Kondensator (3) in Reihe am Wechselspannungsnetz (10, 11) liegt (Fig. 1).

2. Schaltungsanordnung zum Abbremsen eines an einem Wechselspannungsnetz anschließbaren Reihenschlußmotors, vorzugsweise eines Universalmotors, mit einer Feldwicklung (21, 22), die für den Bremsbetrieb des Reihenschlußmotors umgepolt und dem Anker in Reihe gechaltet ist, und mit einem Kondensator (3) der vom Wechselspannungsnetz aufladbar ist und der im Bremsbetrieb des Reihenschlußmotors der umgepolten Feldwicklung (21, 22) einen Strom zuführt, wobie der Reihenschlußmotor nicht umschaltbare Wendepolwicklungen (23, 24) aufweist, die in Reihe zum Anker (5) geschaltet sind, die Wendepolwicklungen (23, 24) mit dem Anker (5) und den umgepolten Feldwicklungen (21, 22) einen Bremskreis (4, 5, 21 bis 24) bilden und während des Bremsbetriebes die Feldwicklung (21, 22) außerdem mit dem Kondensator (3) in Reihe am Wechselspannungsnetz (10, 11) liegt (Fig. 2).

3. Schaltungsanordnung nach einem der vorhergehenden Ansprüche, dadurch gekennzeichnet, daß der über den Kondensator (3) fließende Dauerstrom kleiner als 15 % des Leerlaufstroms des Universalmotors ist.

4. Schaltungsanordnung nach einem der vorhergehenden Ansprüche, dadurch gekennzeichnet, daß zur Begrenzung des Bremsstromes ein Widerstand (4) in Reihe mit dem Anker (5) schaltbar ist.

5. Schaltungsanordnung nach Anspruch 4, dadurch gekennzeichnet, daß der Widerstand (4) veränderbar ist.

## Claims

1. Circuit arrangement for braking a series-wound motor which can be connected to an alternating voltage mains, preferably of a universal motor with a field winding (1, 2) divided into two, in which in the braking mode the first field winding part (2) is reversed in polarity and is connected in series with the armature, and having a capacitor which can be charged up by the alternating voltage mains and which, in the braking mode of the series-wound motor, feeds a current to a field winding part (1), and in which during the braking mode of the motor the second field winding part (1) is connected in series with the capacitor (3) to the alternating voltage mains (10, 11) (Fig. 1).

2. Circuit arrangement for the braking of a series-wound motor which can be connected to an alternating voltage mains, preferably of a universal motor, having a field winding (21, 22), which is reversed in polarity for the braking mode of the series wound motor and is connected in series with the armature, and having a capacitor (3) which can be charged up by the alternating voltage mains and which feeds a current to the reversed-polarity field winding (21, 22) in the braking mode of the series wound motor, in which the series wound motor exhibits non-switchable commutating pole windings (23, 24) which are connected in series with the armature (5), the commutating pole windings (23, 24) form, together with the armature (5) and the reversed-polarity field windings (21, 22), a braking circuit (4, 5, 21 to 24) and during the braking mode the field winding (21, 22) is moreover situated in series with the capacitor (3) connected to the alternating voltage mains (10, 11) (Fig. 2).

3. Circuit arrangement according to one of the preceding claims, characterised in that the continuous current flowing via the capacitor (3) is less than 15 % of the no-load current of the universal motor.

4. Circuit arrangement according to one of the preceding claims, characterised in that, in order to limit the braking current, a resistor (4) can be connected in series with the armature (5).

5. Circuit arrangement according to Claim 4, characterised in that the resistor (4) is variable.

## Revendications

1. Circuit de freinage d'un moteur-série pouvant être raccordé à un réseau de tension alternative, de préférence d'un moteur universel, avec un enroulement d'excitation (1, 2) en deux parties dans lequel en fonctionnement de freinage, la première partie (2) de l'enroulement d'excitation a ses pôles inversés et est montée en série avec l'induit, et avec un condensateur, qui peut être chargé par la tension d'alimentation du réseau et qui en fonctionnement de freinage du moteur-série amène à une partie (1) de l'enroulement d'excitation un courant et par lequel pendant le fonctionnement de freinage du moteur, la seconde partie de l'enroulement d'excitation (1) se trouve en série avec le condensateur (3) sur le reseau de tension alternative (10, 11). (figure 1).

2. Circuit de freinage d'un moteur-série pouvant être raccordé à un réseau de tension alternative, de préférence un moteur universel, avec un enroulement d'excitation (21, 22), dont les pôles sont inversés pour le fonctionnement en freinage du moteur-série et qui est monté en série avec l'induit et avec un condensateur (3) qui peut être chargé par le réseau de tension alternative et qui quand le moteur-série est en fonctionnement de freinage, amène un courant à l'enroulement d'excitation (21, 22) à pôles inversés, dans lequel le moteur-série ne présente pas d'enroulements de commutation (23, 24) pouvant être inversés, qui soient montés en série avec l'induit (5), les enroulements de commutation (23, 24) forment avec l'induit (5) et avec les enroulements d'excitation (21, 22) à pôles inversés un circuit de freinage (4, 5, 21 à 24) et pendant le fonctionnement en freinage l'enroulement d'excitation (21, 22) se trouve en outre avec le condensateur (3) en série sur le réseau de tension alternative (10, 11). (figure 2).

3. Circuit selon l'une des revendications précédentes, caractérisé en ce que le courant permanent passant par le condensateur (3) est plus petit de 15 % que le courant de marche à vide du moteur universel.

4. Circuit selon l'une des revendications précédentes, caractérisé en ce que pour limiter le courant de freinage, on peut monter une résistance (4) en série avec l'induit (5).

5. Circuit selon la revendication 4, caractérisé en ce que la résistance (4) peut être modifiée.
